# EUROPÄISCHE PATENTANMELDUNG

(11) **EP 2 243 978 A2**
(43) Veröffentlichungstag der Anmeldung: **27.10.2010**
(21) Anmeldenummer: 10160024.5
(22) Anmeldetag: 15.04.2010
(51) Int. Cl.: F16F 9/34, F16F 9/46

(54) **Verstelleinrichtung für einen Dämpfer und zugehöriger Dämpfer**

(30) Priorität: 22.04.2009 DE 102009002564
(71) Anmelder: Robert Bosch GmbH, 70442 Stuttgart (DE)
(72) Erfinder: Kurz, Edgar, 74081, Heilbronn-Horkheim (DE)

(57) **Zusammenfassung**

Die Erfindung betrifft eine Verstelleinrichtung (22) zur Regelung eines Dämpferfluidstroms in einer Durchflusseinrichtung (20) eines Dämpfers (10) mit einer verschiebbaren Schiebereinheit (28) und einer in einem Antriebsgehäuse (18b) angeordneten Antriebseinheit, sowie einen korrespondierenden Dämpfer (10), der zur Regelung des Dämpferfluidstroms mindestens eine erfindungsgemäße Verstelleinrichtung (22) aufweist. Erfindungsgemäß ist die verschiebbare Schiebereinheit (28) in dem Antriebsgehäuse (18b) der Antriebseinheit geführt.

## Beschreibung

### Stand der Technik

Die Erfindung geht aus von einer Verstelleinrichtung für einen Dämpfer nach der Gattung des unabhängigen Patentanspruchs 1 und einen korrespondierenden Dämpfer, der mindestens eine solche Verstelleinrichtung umfasst.

In der Offenlegungsschrift DE 10 2007 025 966 A1 wird ein Dämpfer für ein Fahrzeug beschrieben. Der beschriebene Dämpfer umfasst einen mit einem Dämpferfluid befüllten Dämpferzylinder, in welchem ein Kolbenstempel über eine Kolbenstange geführt ist. Bei einer axialen Bewegung der Kolbenstange und damit des Kolbenstempels gegenüber dem Dämpferzylinder muss das Dämpferfluid durch eine innerhalb des Dämpferzylinders angeordnete Durchflusseinrichtung fließen. Durch den Widerstand, welcher dem Dämpferfluid hierbei entgegengebracht wird, werden Druckdifferenzen erzeugt, die über Wirkflächen Dämpfungskräfte erzeugen. Damit der Dämpfer in zwei Richtungen Dämpfungsarbeit ausüben kann und somit sowohl beim so genannten Ausfedern als auch beim so genannten Einfedern dämpft, weist die Durchflusseinrichtung eine in eine erste Durchflussrichtung wirkende Druckstufe und eine in eine zweite Durchflussrichtung wirkende Zugstufe auf. Zur Regelung des Dämpferfluidstroms in der Durchflusseinrichtung ist eine Verstelleinrichtung mit einer Federpaketeinheit, einer in einem Antriebsgehäuse angeordneten Antriebseinheit und einer verschiebbaren Schiebereinheit vorgesehen, die in der Federpaketeinheit geführt ist. Üblicherweise wird der Dämpfer bei seiner Herstellung einmalig mit Dämpferfluid befüllt, welches über die gesamte Lebensdauer des Dämpfers in der einen geschlossenen Kreislauf bildenden Durchflusseinrichtung umläuft.

### Offenbarung der Erfindung

Die erfindungsgemäße Verstelleinrichtung mit den Merkmalen des unabhängigen Patentanspruchs 1 hat demgegenüber den Vorteil, dass die verschiebbare Schiebereinheit in dem Antriebsgehäuse der Antriebseinheit geführt ist. In vorteilhafter Weise ergibt sich hierdurch eine sichere Führung der Schiebereinheit, wodurch sich eine sichere Regelung der Dämpferfluidströmung in der Durchflusseinrichtung ergibt. Insbesondere wird hierdurch in vorteilhafter Weise die Schiebereinheit in der gleichen Baugruppe geführt wie die Antriebseinheit. Das bedeutet, dass die Funktion zur Führung des Schiebers auf die Antriebsbaugruppe übertragen ist, so dass eine zuvor lange Toleranzkette für ein Getriebeelement der Antriebseinheit und die Führung der Schiebereinheit über zwei verschiedene Baugruppen reduziert wird auf eine Toleranz zwischen Führung der Schiebereinheit und Achse des Getriebeelementes in einer Baugruppe. In besonders vorteilhafter Weise können hierdurch die Ansprüche an die Maßhaltigkeit einer Ventilbaugruppe des Dämpfers reduziert werden, da diese nicht mehr zur Führung der Schiebereinheit vorgesehen ist. Insbesondere ergibt sich ein günstiges Verhältnis der Schiebereinheit zwischen deren Länge und deren Breite von vorzugsweise 2:1, wodurch sich ein optimaler Wert für eine Schieberführung ergibt. Außerdem können die Toleranzen der einzelnen Bauteile großzügiger ausgelegt werden, was zu weniger aufwändigen und somit günstigeren Fertigungsverfahren führt.

Ein erfindungsgemäßer Dämpfer, insbesondere für ein Fahrzeug, umfasst zur Regelung einer Dämpferfluidströmung in mindestens einer Durchflusseinrichtung mindestens eine erfindungsgemäße Verstelleinrichtung, um Dämpferkennwerte des Fahrzeugdämpfers einzustellen.

Durch die in den abhängigen Ansprüchen aufgeführten Maßnahmen und Weiterbildungen sind vorteilhafte Verbesserungen der im unabhängigen Patentanspruch 1 angegebenen Verstelleinrichtung für einen Dämpfer möglich.

In einer Ausgestaltung der erfindungsgemäßen Verstelleinrichtung ist ein Steg der Schiebereinheit in einer Führungskontur des Antriebsgehäuses geführt. In einer weiteren Ausgestaltung der erfindungsgemäßen Verstelleinrichtung ist die Führungskontur in einem Boden des Antriebsgehäuses angeordnet. In besonders vorteilhafter Weise übernimmt der in der Führungskontur geführte Steg die seitliche Führung für die lineare Bewegung der Schiebereinheit, so dass die Schiebereinheit sicher und ohne zu Verkippen verschiebbar ist.

Bevorzugt ist die Führungskontur als Nut oder als Schlitz ausgebildet. In vorteilhafter Weise ergibt sich hierdurch eine besonders einfache und kostengünstige Herstellung der Führungskontur, da die Führungskontur eine konstruktiv einfache Ausgestaltung aufweist.

Vorzugsweise weist der Steg der Schiebereinheit ein Formschlusselement auf, das in einer Ausbuchtung der Führungskontur aufnehmbar ist. In vorteilhafter Weise wird hierdurch ein Formschluss zwischen Schiebereinheit und Antriebsgehäuse erzeugt, so dass eine für die Montage des Dämpfers bzw. der Schiebereinheit und des Antriebsgehäuses wichtige Verliersicherung entsteht.

In vorteilhafter Weise ist die Schiebereinheit in einer Ausnehmung einer Führungsplatte des Dämpfers verschiebbar. Hierdurch ergibt sich auf konstruktiv einfache Weise eine Reduzierung der Bauhöhe der Kolbenstempeleinheit, wodurch der nutzbare Hub des Dämpfers in vorteilhafter Weise vergrößert wird. Da die Schiebereinheit im Antriebsgehäuse geführt wird, hat die Führungsplatte keine Führungsfunktion mehr und kann in vorteilhafter Weise als einfache Distanzscheibe mit stark reduzierten Anforderungen an Oberflächengüte und Genauigkeit ausgeführt werden.

Bevorzugt ist die Führungsplatte als Federpaketeinheit ausgebildet. In vorteilhafter Weise ermöglicht die Federpaketeinheit eine gezielte Einstellung des Dämpferverhaltens.

In einer Ausgestaltung weist die erfindungsgemäße Verstelleinrichtung eine Getriebeeinheit mit einem ersten, mit der Schiebereinheit in Wirkverbindung stehenden Getriebeelement und einem zweiten, mit der Antriebseinheit in Wirkverbindung stehenden Getriebeelement auf. In vorteilhafter Weise ergibt sich hierdurch auf einfache Weise eine sichere Umwandlung einer ersten Bewegung, insbesondere einer Rotationsbewegung, der Antriebseinheit in eine zweite Bewegung, insbesondere eine Translationsbewegung, der Schiebereinheit.

In weiterer Ausgestaltung ist das erste Getriebeelement als Zahnstangensegment und das zweite Getriebeelement als Zahnradsegment ausgebildet. In vorteilhafter Weise ist hierdurch eine einfache und kostengünstige Herstellung der Getriebeeinheit möglich. Insbesondere ist das Zahnstangensegment einstückig mit der Schiebereinheit ausgeführt und ermöglicht somit eine besonders aufwandsreduzierte Herstellung eines Teils der Getriebeeinheit, da das Zahnstangensegment gleichzeitig mit der Schiebereinheit herstellbar ist. Zudem ist als Zahnradsegment beispielsweise ein handelsübliches Normteil einsetzbar. Ein wesentlicher Vorteil besteht somit in der einfachen Herstellung und im geringen Platzbedarf der Getriebeeinheit und der dadurch erreichten Kostenersparnis. Insbesondere ist hiermit eine großserientaugliche Herstellung der Getriebeeinheit bzw. der Schiebereinheit möglich.

Besonders vorteilhaft ist, dass die Herstellung des Antriebsgehäuses in einem Stanz-Tiefzieh-Prozess erfolgen kann. Auf Grund der konstruktiv einfachen Ausführung und somit vereinfachten Herstellungsmöglichkeit der Führungskontur ergibt sich eine einfache und kostengünstige Herstellung des Antriebsgehäuses, indem das Antriebsgehäuse tiefgezogen und für die Ausbildung der Führungskontur durchgestanzt wird. Somit kann in einem Arbeitsgang mit dem Antriebsgehäuse auch gleichzeitig die Führungskontur hergestellt werden, wodurch sich eine hohe Lagegenauigkeit zwischen einer Achse des Zahnradsegmentes und der Führungskontur ergibt. In vorteilhafter Weise verringern sich hierdurch die Toleranzketten der Bauteile des Dämpfers.

Ein Ausführungsbeispiel der Erfindung ist in den Zeichnungen dargestellt und wird in der nachfolgenden Beschreibung näher erläutert.

### Kurze Beschreibung der Zeichnungen

Figur 1 zeigt eine schematische perspektivische Darstellung eines Ausführungsbeispiels eines erfindungsgemäßen Dämpfers mit einem Dämpferzylinder und einer eine Kolbenstange und einen Kolbenstempel umfassenden Kolbeneinheit.
Figur 2 zeigt eine Draufsicht auf ein Ausführungsbeispiel des Kolbenstempels mit einem Stempelrohr und einem in dem Stempelrohr angeordneten Antriebsgehäuse.
Figur 3 zeigt eine perspektivische Darstellung des Dämpfers mit einer erfindungsgemäßen Verstelleinrichtung, die eine verschiebbare Schiebereinheit und eine in dem Antriebsgehäuse angeordnete Antriebseinheit umfasst, wobei die Schiebereinheit in dem Antriebsgehäuse geführt ist.
Figur 4 zeigt eine perspektivische Darstellung des Antriebsgehäuses mit einem Getriebeelement der Antriebseinheit und einer erfindungsgemäßen Führungskontur zur Führung der Schiebereinheit in einer Ansicht von unten.
Figur 5 zeigt eine perspektivische Darstellung der Schiebereinheit in einer Draufsicht mit einem Steg zur Führung der Schiebereinheit in der Führungskontur des Antriebsgehäuses.
Figur 6 zeigt eine perspektivische Darstellung des Antriebsgehäuses mit der Schiebereinheit in einer Ansicht von unten, wobei der Steg der Schiebereinheit in der Führungskontur des Antriebsgehäuses geführt ist.
Figur 7 zeigt einen Schnitt durch das Antriebsgehäuse mit der Schiebereinheit, wobei ein Formschlusselement des Stegs der Schiebereinheit durch eine Ausbuchtung der Führungskontur durchgeschoben ist.

### Ausführungsformen der Erfindung

In den Figuren werden gleiche oder im Wesentlichen gleiche Funktionen ausführende Elemente mit den gleichen Bezugszeichen versehen.

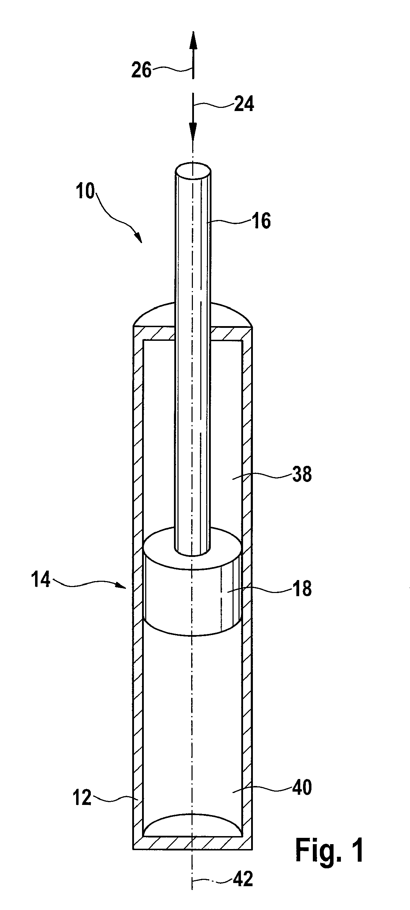

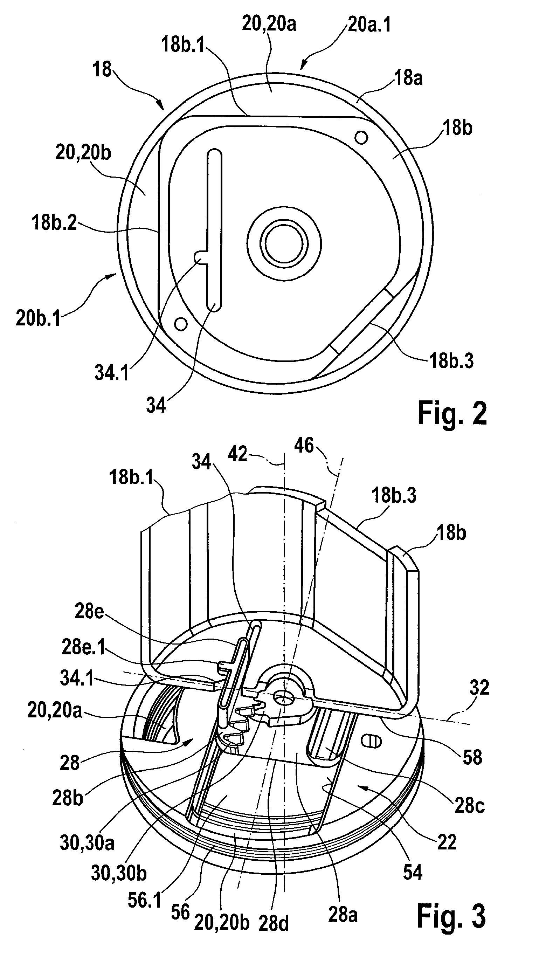

Wie aus Fig. 1 ersichtlich ist, umfasst ein erfindungsgemäßer Dämpfer 10, der vorzugsweise als Stoßdämpfer eines Fahrzeugs ausgeführt ist, einen mit einem Dämpferfluid befüllten Dämpferzylinder 12, in dem eine Kolbeneinheit 14 beweglich angeordnet ist, die eine Kolbenstange 16 und einen Kolbenstempel 18 umfasst, wobei der Kolbenstempel 18 über die Kolbenstange 16 in dem Dämpferzylinder 12 geführt wird. Der Kolbenstempel 18 teilt den Dämpferzylinder 12 in eine obere Dämpferkammer 38 und in eine untere Dämpferkammer 40. Bei einer axialen, vorzugsweise in Richtung einer Hochachse 42 des Dämpfers 10 verlaufenden Bewegung der Kolbenstange 16 und damit des Kolbenstempels 18 gegenüber dem Dämpferzylinder 12 muss das Dämpferfluid durch eine innerhalb des Dämpferzylinders 12 angeordnete, in den Fig. 2 und 3 dargestellte Durchflusseinrichtung 20 fließen, die vorzugsweise zwei Durchflusskanäle 20a, 20b aufweist.

Wie aus Fig. 2 ersichtlich ist, ist der Kolbenstempel 18 als kompakte Einheit ausgeführt. Der Kolbenstempel 18 umfasst ein Stempelrohr 18a, das beispielsweise als dünnwandiges Stahlrohr ausgeführt ist, und ein innerhalb des Stempelrohres 18a angeordnetes Antriebsgehäuse 18b, welches eine hier nicht dargestellte Antriebseinheit aufnimmt. Die Geometrien des Stempelrohres 18a und des Antriebsgehäuses 18b bilden gemeinsam die beiden Durchflusskanäle 20a und 20b der Durchflusseinrichtung 20. Hierzu ist das Antriebsgehäuse 18b im Wesentlichen zylinderförmig ausgebildet und weist an seinem Umfang vorzugsweise drei Abplattungen 18b.1, 18b.2, 18b.3 auf, die drei ebene Flächen bilden. Wie insbesondere aus Fig. 2 ersichtlich ist, bilden zwei Abplattungen 18b.1, 18b.2 des Antriebsgehäuses 18b im vorliegenden Ausführungsbeispiel zusammen mit dem Stempelrohr 18a die aus freien Querschnitten 20a.1, 20b.1 gebildeten Durchflusskanäle 20a, 20b der Durchflusseinrichtung 20 zum Durchfluss des Dämpferfluids, d.h. die Durchflusskanäle 20a, 20b sind im Wesentlichen zwischen den Abplattungen 18b.1, 18b.2 des Antriebsgehäuses 18b und der Innenwand des Stempelrohres 18a angeordnet. Die dritte Abplattung 18b.3 bildet mit der Innenwand des Stempelrohres 18a im dargestellten Ausführungsbeispiel einen Versorgungskanal, der beispielsweise zur elektrischen Kontaktierung der nicht dargestellten Antriebseinheit verwendet werden kann, wobei die Antriebseinheit beispielsweise als Drehmagnetantrieb ausgeführt sein kann.

Wie aus Fig. 1 weiter ersichtlich ist, umfasst die Durchflusseinrichtung 20 mindestens eine in eine erste Durchflussrichtung 24 wirkende Zugstufe und/oder mindestens eine in eine zweite Durchflussrichtung 26 wirkende Druckstufe. Im vorliegenden Ausführungsbeispiel wirkt die Zugstufe im Durchflusskanal 20a und die Druckstufe im Durchflusskanal 20b. Die Durchflussrichtung 24, 26 der beiden Durchflusskanäle 20a, 20b ist entgegengesetzt, wobei sich die jeweilige Richtung innerhalb eines Kanals 20a, 20b nicht ändert. Vorzugsweise bildet die Durchflusseinrichtung 20 einen geschlossenen Kreislauf.

Wie aus der Fig. 3 ersichtlich ist, ist innerhalb des Dämpferzylinders 12 eine Verstelleinrichtung 22 zur Regelung des Dämpferfluidstroms in der Durchflusseinrichtung 20 angeordnet, die eine verschiebbare Schiebereinheit 28 und eine in dem Antriebsgehäuse 18b angeordnete Antriebseinheit aufweist. Die Schiebereinheit 28 schließt sich an das Antriebsgehäuse 18b, bevorzugt an einen geodätisch untenliegenden Bodenbereich des Antriebsgehäuses 18b an. Im vorliegenden Ausführungsbeispiel grenzt die Schiebereinheit 28 unmittelbar an das Antriebsgehäuse 18b bzw. an den Boden 58 des Antriebsgehäuses 18b an. Im vorliegenden Ausführungsbeispiel ist die Schiebereinheit 28 in einer Ausnehmung 54 einer Führungsplatte 56 des Dämpfers 10 entlang einer Längsachse 46 verschiebbar angeordnet. Die Führungsplatte 56 ist als Federpaketeinheit ausgebildet, so dass die Schiebereinheit 28 über einem in der Ausnehmung 54 angeordneten Federpaket 56.1 entlang der Längsachse 46 verschiebbar angeordnet ist.

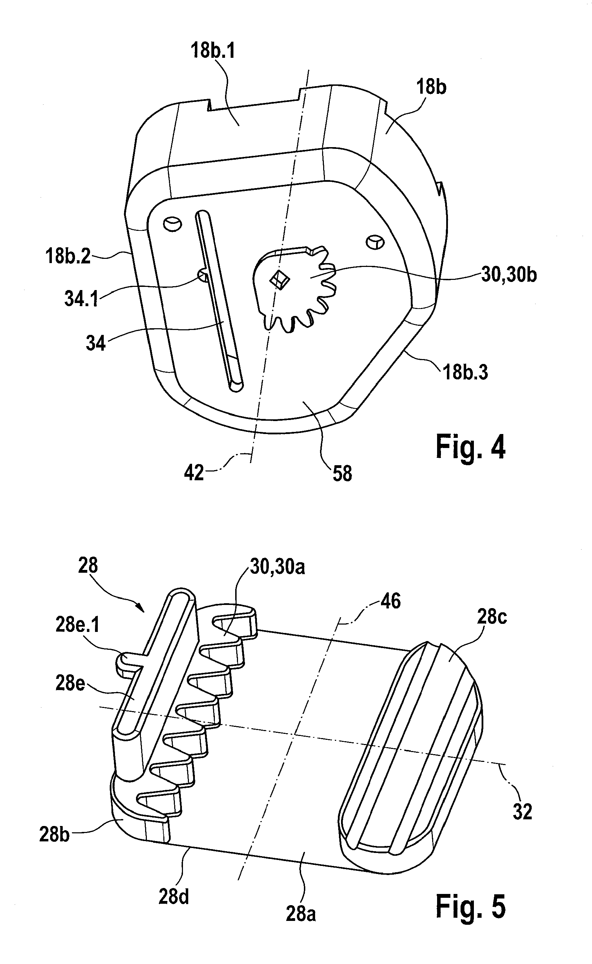

Wie aus den Fig. 2 und 5 ersichtlich ist, weist die Schiebereinheit 28 im vorliegenden Ausführungsbeispiel ein Mittelsegment 28a und zwei sich jeweils an das Mittelsegment 28a anschließende, in Richtung der Hochachse 42 über das Mittelsegment 28a überstehende Seitensegmente 28b, 28c auf, welche sich bevorzugt gegenüberliegen. Das Mittelsegment 28a und die beiden Seitensegmente 28b, 28c bilden gemeinsam einen flächigen Bodenbereich 28d der Schiebereinheit 28 aus. Vorzugsweise ist die Schiebereinheit 28 aus einem stranggepressten Profil hergestellt.

Gemäß Fig. 3 umfasst die Verstelleinrichtung 22 eine Getriebeeinheit 30, die ein erstes, mit der Schiebereinheit 28 in Wirkverbindung stehendes Getriebeelement 30a aufweist, in das ein zweites, mit der Antriebseinheit in Wirkverbindung stehendes Getriebeelement 30b eingreift. Im vorliegenden Ausführungsbeispiel ist das erste Getriebeelement 30a vorzugsweise einstückig mit der Schiebereinheit 28 ausgeführt. Im vorliegenden Ausführungsbeispiel ist das erste Getriebeelement 30a als Zahnstangensegment ausgeführt, in welches das zweite, als Zahnradsegment ausgeführte Getriebeelement 30b eingreift, welches zur Positionsveränderung der Schiebereinheit 28 von der korrespondierenden, hier nicht dargestellten Antriebseinheit bewegt wird. Im vorliegenden Ausführungsbeispiel wandelt daher die Getriebeeinheit 30, 30a und 30b eine Rotationsbewegung der Antriebseinheit in eine Translationsbewegung der Schiebereinheit 28 in Richtung der Längsachse 46 um, indem die Antriebseinheit das Zahnradsegment 30b mit einer Rotationsbewegung beaufschlagt, welches in das Zahnstangensegment 30a eingreift und dieses in eine Translationsbewegung versetzt. Das bedeutet, dass zum Verschieben der Schiebereinheit 28 die Getriebeeinheit 30 das Zahnstangensegment 30a aufweist, in welches das Zahnradsegment 30b eingreift, das zur Positionsveränderung der Schiebereinheit 28 von der korrespondierenden Antriebseinheit gedreht wird. Zur Einstellung des Dämpferfluidstroms in der Durchflusseinrichtung 20 wird die Verstelleinrichtung 22 aktiviert, indem die Schiebereinheit 28 der Verstelleinrichtung 22 verschoben wird.

Vorzugsweise ist das Getriebeelement 30a gemäß Fig. 3 und 5 mindestens teilweise in ein Seitensegment 28b, 28c integriert. Im vorliegenden Ausführungsbeispiel ist das Getriebeelement 30a mindestens teilweise in das Seitensegment 28b integriert, indem das Getriebeelement 30a und das Seitensegment 28b einstückig ausgebildet sind. Das Seitensegment 28b weist in einem dem anderen Seitensegment 28c zugewandten Bereich eine Verzahnung auf, wobei das Seitensegment 28b als Zahnstangensegment der Getriebeeinheit 30 ausgebildet ist, beziehungsweise die Funktion eines Zahnstangensegments der Getriebeeinheit 30 ausübt. Das bedeutet, dass zum Verschieben der Schiebereinheit 28 das Seitensegment 28b die Verzahnung aufweist, in welche die Zähne des Zahnradsegments 30b der Getriebeeinheit 30 eingreifen, welches zur Positionsveränderung der Schiebereinheit 28 von der korrespondierenden Antriebseinheit gedreht wird.

Um eine sichere, insbesondere auch seitliche Führung der Schiebereinheit 28 bei einfacher und kostengünstiger Herstellung des Dämpfers 10 zu ermöglichen, ist, wie aus Fig. 3, 6 und 7 ersichtlich ist, die verschiebbare Schiebereinheit 28 erfindungsgemäß in dem Antriebsgehäuse 18b der Antriebseinheit geführt. Hierzu ist ein Steg 28e der Schiebereinheit 28 in einer Führungskontur 34 des Antriebsgehäuses 18b geführt. Wie aus den Fig. 3, 4, 6 und 7 ersichtlich ist, ist die Führungskontur 34 in dem Boden 58 des Antriebsgehäuses 18b angeordnet. Vorzugsweise ist die Führungskontur 34 als in Richtung der Längsachse 46 verlaufende Nut oder als in Richtung der Längsachse 46 verlaufender Schlitz ausgebildet. Bevorzugt ist das Antriebsgehäuse 18b in einem Stanz-Tiefzieh-Prozess hergestellt.

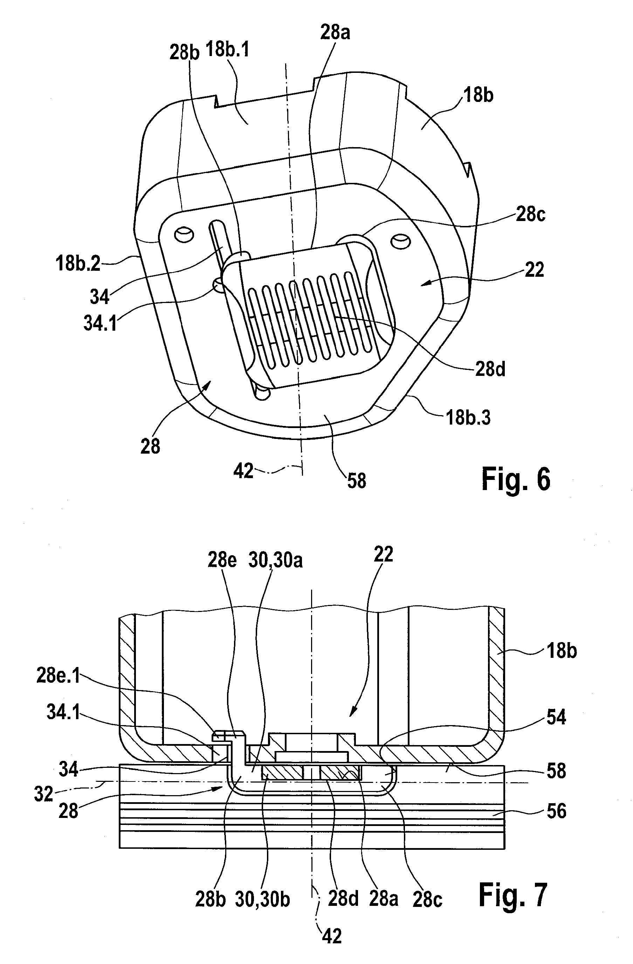

Um eine sichere Montage von Schiebereinheit 28 und Antriebsgehäuse 18b zu ermöglichen, weist der Steg 28e der Schiebereinheit 28 gemäß Fig. 3 bis 7 ein Formschlusselement 28e.1 auf, das in einer Ausbuchtung 34.1 der Führungskontur 34 aufnehmbar ist. Bei der Montage wird das Formschlusselement 28e.1 des Steges 28e in die Ausbuchtung 34.1 der Führungskontur 34 eingeführt, durch die Ausbuchtung 34.1 durchgeschoben und in Richtung der Längsachse 46 verschoben, so dass das Formschlusselement 28e.1 anschließend längsverschiebbar im Antriebsgehäuse 18b gehalten ist. Das bedeutet, dass das Formschlusselement 28e.1, wie insbesondere aus Fig. 7 ersichtlich ist, nach der Montage im Inneren des Antriebsgehäuses 18b an dem Antriebsgehäuse 18b anliegt. Hierdurch ist der Steg 28e der Schiebereinheit 28 längsverschiebbar in der Führungskontur 34 gehalten. Ein Herausfallen der Schiebereinheit 28 in Richtung der Hochachse 42 wird somit verhindert.

Ein erfindungsgemäßer Dämpfer für ein Fahrzeug umfasst zur Regelung einer Dämpferfluidströmung in mindestens einem Durchflusskanal mindestens eine erfindungsgemäße Verstelleinrichtung, um Dämpferkennwerte des Fahrzeugdämpfers einzustellen.

## Patentansprüche

1. Verstelleinrichtung (22) zur Regelung eines Dämpferfluidstroms in einer Durchflusseinrichtung (20) eines Dämpfers (10) mit einer verschiebbaren Schiebereinheit (28) und einer in einem Antriebsgehäuse (18b) angeordneten Antriebseinheit, **dadurch gekennzeichnet, dass** die verschiebbare Schiebereinheit (28) in dem Antriebsgehäuse (18b) der Antriebseinheit geführt ist.

2. Verstelleinrichtung nach Anspruch 1, **dadurch gekennzeichnet, dass** ein Steg (28e) der Schiebereinheit (28) in einer Führungskontur (34) des Antriebsgehäuses (18b) geführt ist.

3. Verstelleinrichtung nach Anspruch 2, **dadurch gekennzeichnet, dass** die Führungskontur (34) in einem Boden (58) des Antriebsgehäuses (18b) angeordnet ist.

4. Verstelleinrichtung nach Anspruch 2 oder 3, **dadurch gekennzeichnet, dass** die Führungskontur (34) als Nut oder als Schlitz ausgebildet ist.

5. Verstelleinrichtung nach einem der Ansprüche 2 bis 4, **dadurch gekennzeichnet, dass** der Steg (28e) der Schiebereinheit (28) ein Formschlusselement (28e.1) aufweist, das in einer Ausbuchtung (34.1) der Führungskontur (34) aufnehmbar ist.

6. Verstelleinrichtung nach einem der Ansprüche 1 bis 5, **dadurch gekennzeichnet, dass** die Schiebereinheit (28) in einer Ausnehmung (54) einer Führungsplatte (56) des Dämpfers (10) verschiebbar ist.

7. Verstelleinrichtung nach Anspruch 6, **dadurch gekennzeichnet, dass** die Führungsplatte (56) als Federpaketeinheit ausgebildet ist.

8. Verstelleinrichtung nach einem der Ansprüche 1 bis 7, **gekennzeichnet durch** eine Getriebeeinheit (30) mit einem ersten, mit der Schiebeeinheit (28) in Wirkverbindung stehenden Getriebeelement (30a) und einem zweiten, mit der Antriebseinheit in Wirkverbindung stehenden Getriebeelement (30b).

9. Verstelleinrichtung nach Anspruch 8, **dadurch gekennzeichnet, dass** das erste Getriebeelement (30a) als Zahnstangensegment und das zweite Getriebeelement (30b) als Zahnradsegment ausgebildet ist.

10. Verstelleinrichtung nach einem der Ansprüche 1 bis 9, **gekennzeichnet durch** eine Herstellung des Antriebsgehäuses (18b) in einem Stanz-Tiefzieh-Prozess.

11. Dämpfer (10), insbesondere für ein Fahrzeug, wobei zur Einstellung von Dämpferkennwerten ein Fluss eines Dämpferfluids durch mindestens eine Durchflusseinrichtung (20) regelbar ist, **dadurch gekennzeichnet, dass** zur Regelung des Dämpferfluidflusses mindestens eine Verstelleinrichtung (22) nach einem der Ansprüche 1 bis 10 vorgesehen ist.
